# EUROPEAN PATENT APPLICATION

(11) **EP 2 700 524 A2**
(43) Date of publication of application: **26.02.2014**
(21) Application number: 13181425.3
(22) Date of filing: 22.08.2013
(51) Int. Cl.: B60J 10/12, B60J 7/00, B60J 7/043

(54) **Sunroof device**

(30) Priority: 22.08.2012 JP 2012183044
(71) Applicant: Yachiyo Industry Co., Ltd., Sayama-shi Saitama (JP)
(72) Inventor: Kanai, Toshiyuki, Sakura-shi, Tochigi (JP)
(74) Representative: Tomlinson, Kerry John

(57) **Abstract**

This invention provides a sunroof device, which is simple and compact in constitution around a drain channel (25). The sunroof device (1) is constituted to close a roof opening (3) by extending a front edge of a movable roof panel (4) on an upper edge of a front window (5) without sandwiching a roof outside plate. The sunroof device (1) comprises a front roof stiffener (19) and a rear roof stiffener (26) provided in an edge of the roof opening (3), and a seal member mounted at the front roof stiffener (19) and the rear roof stiffener (26) and sealing the movable roof panel at the time of closing the roof opening (3). The roof stiffener is provided with a drain channel (25) and the seal member is constituted to form a part of channel wall of the drain channel (25).

## Description

### Background of the Invention

### Field of the Invention

The present invention relates to a sunroof device of automobiles.

### Background Arts

A conventional sunroof device, which is provided with a roof stiffener mounted at an edge of a roof opening and a seal body mounted at the roof stiffener to seal a roof panel at the time of closing the roof opening, is disclosed in Japanese Unexamined Laid-open Publication No. 260,393 of 2010. This Publication discloses an art mounting a seal member on a base member as the roof stiffener.

### Summary of the Invention

A drain channel is required for removing rainfall or the like in a lower side of a roof opening edge. The above-mentioned roof stiffener and the seal member are, however, provided in the lower side of the roof opening edge. As a result, there is a problem, that is, it is easy to become complicated in structure around the drain channel.

The present invention has been made to solve the above problem. It is an object to provide a sunroof device to be simple and compact in structure around the drain channel.

In order to solve the above problem, the present invention is constituted to close the roof opening by extending a front edge of the movable roof panel to an upper edge of a front window without putting a roof outer plate therebetween. Further, the present invention is provided with a roof stiffener mounted at an edge of the roof opening and a seal member mounted at the roof stiffener to seal the roof panel at the time of closing the roof opening. Still further, the roof stiffener is constituted to form a drain channel and the seal member is constituted to be a part of a channel wall of the drain channel.

The sunroof device is constituted to use both as a drain function and a watertight function of the roof panel. Then, it becomes simple and compact in structure around the drain channel. The roof stiffener also becomes simple in cross-sectional shape.

### Effect of the Invention

The present invention can provide a simple and compact structure around the drain channel.

### Brief Description of Drawings

Certain preferred embodiments of the invention will now be described in greater detail, by way of example only, and with reference to the accompanying drawings in which:
Figure 1 is a plan view of the sunroof device according to the present invention.
Figure 2 is a sectional view taken along a line II - II in Figure 1;
Figure 3 is a side view of a panel support stay;
Figure 4 is a sectional view taken along a line IV-IV in Figure 1;
Figure 5 is an enlarged sectional view around a front edge of the roof panel in Figure 2;
Figure 6 is an enlarged sectional view around the front edge of the roof panel in Figure 2 in case of providing a patch piece;
Figure 7 is an enlarged sectional view around a rear edge of the roof panel in Figure 2;
Figure 8A and 8B are side views showing a function of the sunroof device according to the present invention;
Figure 9A and 9B are side views showing a function of the sunroof device according to the present invention;
Figure 10 is an explanatory side view showing a condition of visual field around a front roof rail;
Figure 11 is a perspective view showing each of front, side, and rear panel holders, and front and rear joint members mutually connecting the above panel holders;
Figure 12A is a side view around a rear edge of the roof panel showing a watertight condition of the seal member with the rear joint member; and
Figure 12B is a side view around a rear edge of the roof panel showing a watertight condition of the seal member without the rear joint member.

### An embodiment for carrying out the Invention

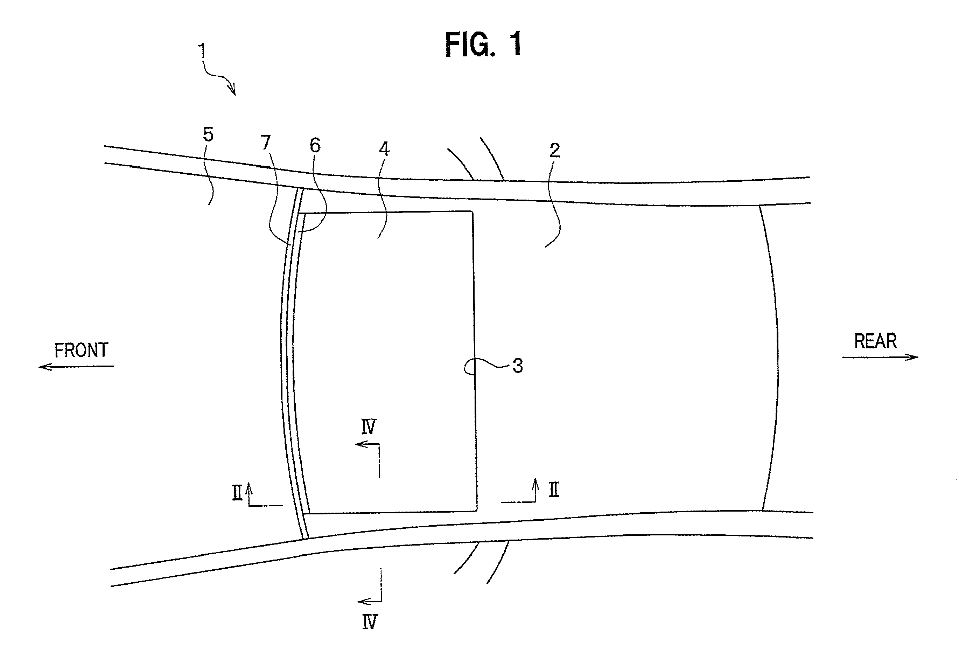

As shown in Figure 1, a sunroof device 1 according to the present invention is openably and closably provided with an opening 3 of the fixed roof 2 of automobiles. The sunroof device 1 is provided with an outer sliding roof panel 4 moving toward a rear direction by tilting up while opening. The roof panel 4 is made of material such as glass and plastics.

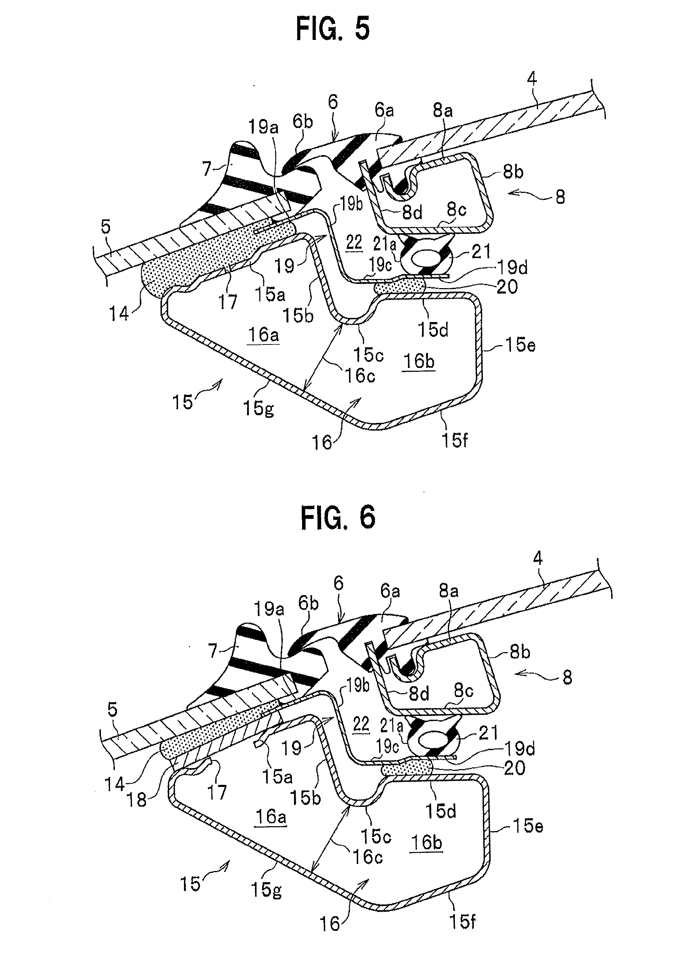

The opening 3 is constituted to cut off a front edge of the roof outer plate of the fixed roof 2 to be rectangular in shape. Conventionally, it is constituted to extend the roof panel to a rear direction of the roof outer plate when closing. The roof panel 4 in closing, as shown in Figure 1, is constituted to extend left and right edges and a rear edge to the roof outer plate of the fixed roof 2, and to directly extend a front edge to an upper edge of the front window 5 without putting the roof outer plate therebetween. Strictly speaking, a weather strip 6 made of rubber or the like mounted at a front edge of the roof panel 4 and a weather strip 7 made of rubber or the like mounted at an upper edge of the front window 5 keep slightly in contact. Then, a front edge of the roof panel 4 and an upper edge of the front window 5 lie on a same surface. As shown in Figure 5, the weather strip 6 is constituted to provide a base 6a arranged at a front edge of the roof panel 4 and a thin lip having a form of tongue extending forward from a front edge of the base 6a. A tip of the lip 6b is constituted to keep in contact with a rear upper surface of the weather strip 7.

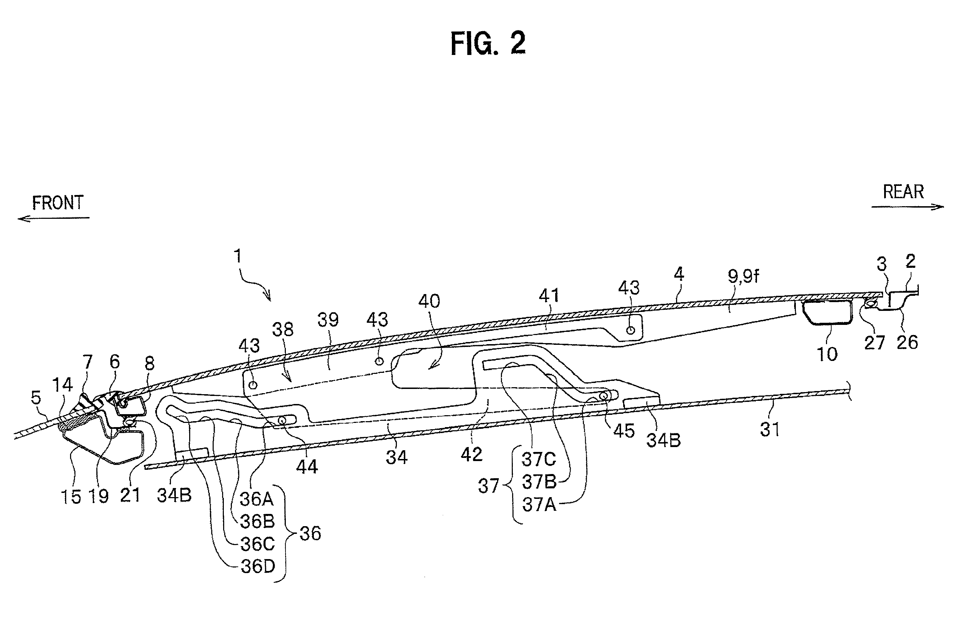

In Figure 2, as a principal object of reinforcement of the roof panel 4, a front panel holder 8, a side panel holder 9, and a rear panel holder 10 are respectively attached by an adhesive or the like in each lower surface of a front edge, both edges, and a rear edge of the roof panel 4. The front panel holder 8, the side panel holder 9, and the rear panel holder 10 are made of metallic material such as galvanized steel sheet.

As shown in Figure 5, the front panel holder 8 has a sectional shape providing an upper surface 8a extending slightly rearward and upward along a slope of a front edge of the roof panel 4, a rear surface 8b extending downward and crossing a panel surface of the roof panel 4 at about right angle from a rear edge of the upper surface 8a, a lower surface 8c extending forward and approximately horizontally from a lower edge of the rear surface 8b, and a front surface 8d extending upward and crossing the panel surface of the roof panel 4 at about right angle from a front edge of the lower surface 8c and embedding an upper portion thereof in the base 6a of the weather strip 6. The portion around a front edge of the upper surface 8a is constituted to bend in an approximately U shape to protrude downward, and thus it is engaged with a part of the base 6a of the weather strip 6. As above mentioned, the front panel holder 8 is mounted to a lower surface of the roof panel 4 through the weather strip 6. In addition thereto or in place thereof, it may be constituted to attach an upper surface 8a to a lower surface of the roof panel 4 by an adhesive.

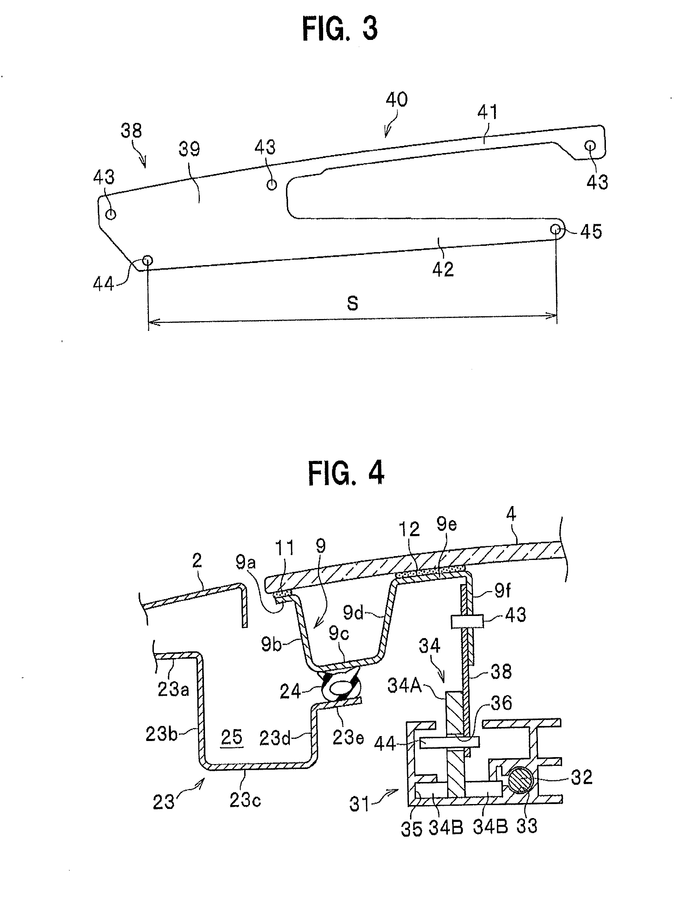

As shown in Figure 4, the side panel holder 9 has a sectional shape providing a first upper surface 9a attached by an adhesive 11 to a lower surface of a side edge of the roof panel 4, a first side surface 9b extending downward from an edge placed in the central side of width direction of the first upper surface 9a and crossing a panel surface of the roof panel 4 at about right angle, a lower surface 9c extending from a lower edge of the first side surface 9b to incline slightly upward toward a central side of width direction in parallel to a panel surface of the roof panel 4, a second side surface 9d extending upward from an edge placed in the central side of width direction of the lower surface 9c, a second upper surface 9e extending from an upper edge of the second side surface 9d toward a central side of width direction and attached by an adhesive 12 to a lower surface of the roof panel 4, and a bracket 9f having a shape like an approximately vertical plate extending downward from an edge placed in the central side of width direction of the second upper surface 9e. A closed sectional space functioned as reinforcement is constituted by the first side surface 9b, the lower surface 9c and the second side surface 9d formed to close a lower surface of the roof panel 4. The bracket 9f is constituted to connect to the panel support stay 38, as described later.

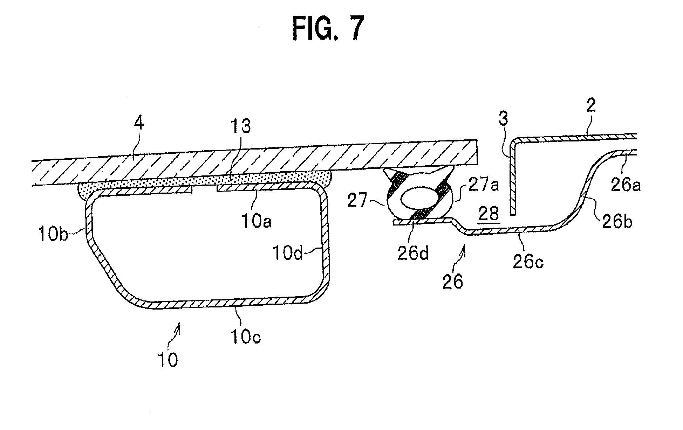

As shown in Figure 7, the rear panel holder 10 has a sectional shape providing an upper surface 10a attached by an adhesive 13 to a lower surface of a rear edge of the roof panel 4, a front surface 10b extending downward from a front edge of the upper surface 10a, a lower surface 10c extending rearward from a lower edge of the front surface 10b in an approximately parallel to a panel surface of the roof panel 4, and a rear surface 10d extending upward from a rear edge of the lower surface 10c to connect to a rear edge of the upper surface 10a. These four surfaces are constituted to form a closed sectional space having an approximately rectangular shape. The rear panel holder 10 is mounted to a lower surface placed in a front side slightly from a rear edge of the roof panel 4.

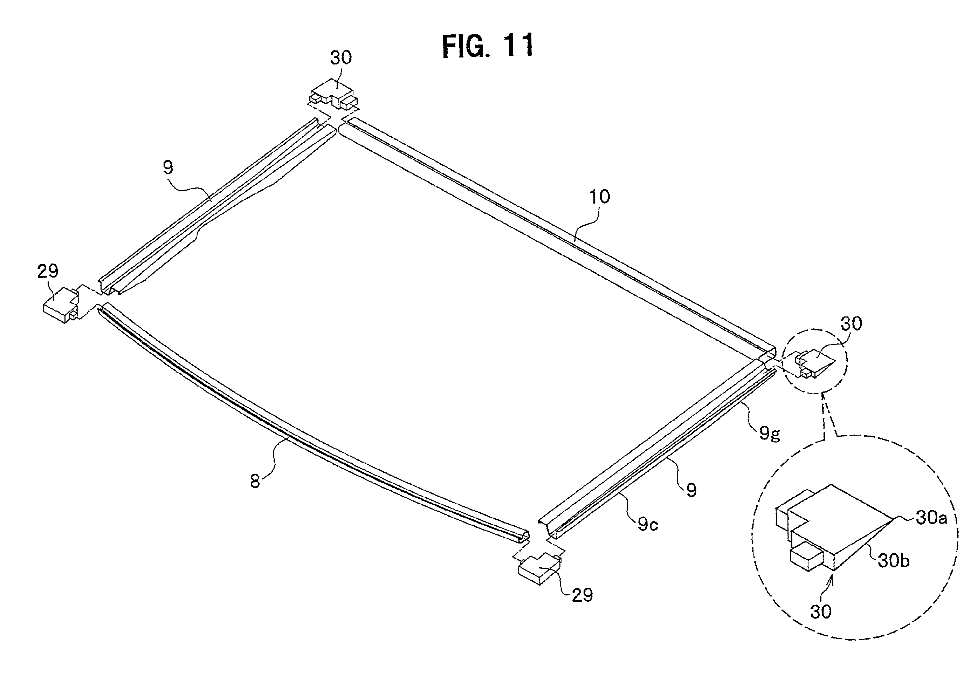

As shown in Figure 11, either end of the front panel holder 8 and a front edge of the side panel holder 9 are respectively connected by the front joint member 29, and either end of the rear panel holder 10 and a rear edge of the side panel holder 9 are respectively connected by the rear joint member 30. Each upper surface of the front joint member 29 and the rear joint member 30 is appropriately mounted by an adhesive or the like to a lower surface placed at four corners of the roof panel 4. The front joint member 29 and the rear joint member 30 are made of material such as plastics.

As shown in Figure 2, a front roof rail 15 is attached by an adhesive 14 to an inner surface of an upper edge of the front window 5. The front roof rail 15 is a member extending in a width direction for maintaining a strength of the front window 5 to be an approximately closed sectional structure. The front roof rail 15 is made by a bending such as a roll forming of a metal sheet, for example, a galvanized steel sheet.

As shown in Figure 5, the front roof rail 15 has a sectional shape providing an attaching surface 15a attached by the adhesive 14 to an inner surface of an upper edge of the front window 5, an upper rear surface 15b extending downward from a rear edge of the attaching surface 15a and crossing a window surface of the front window 5 at about right angle, a concave surface 15c folded down slightly upward in an arc to be concave toward rearward and upward from a lower edge of the upper rear surface 15b, a support surface 15d extending rearward and approximately horizontally from an rear edge of the concave surface 15c, a lower rear surface 15e extending downward and approximately vertically from a rear edge of the support surface 15d, a lower surface 15f extending obliquely forward and downward from a lower edge of the lower rear surface 15e, and an inclined surface 15g extending obliquely forward and upward from a front edge of the lower surface 15f. An upper edge of the inclined surface 15g is a portion positioned at a foremost front edge of the front roof rail 15 to fold down upward and extend to a front edge of the attaching surface 15a

In accordance with a configuration of the front roof rail 15 as above mentioned, the closed sectional space 16 of the front roof rail 15 is constituted by a front space 16a surrounded mainly by the attaching surface 15a, the upper rear surface 15b, and the lower surface 15g approximately as a border, which is a confined portion 16c formed by reducing a distance between the concave surface 15c and the inclined surface 15g, and a rear space 16b surrounded mainly by the support surface 15d, the lower rear surface 15e, and the lower surface 15f. The front space 16a positions directly under the attaching surface 15a mounted to the front window 5. The rear space 16b extends rearward in the front space 16a and positions directly under a front edge of the roof panel 4 at the time of closing, that is, directly under the front panel holder 8.

As above mentioned, as the front roof rail 15 is a member formed by bending a sheet of metal plate, a joint section 17 of plates is formed. Figure 5 shows that the front roof rail 15 is formed to position the joint section 17 in the attaching surface 15a. Then, the joint section 17 is constituted to increase the rigidity of the front roof rail 15 by sealing of the adhesive 14. As the other example, it may be constituted to mount a patch piece 18 as a separate member by welding to seal the joint section 17. In this case, it is not required for sealing by the adhesive 14, the front roof rail 15 may be made to position the joint section 17 in a place except the attaching surface 15a.

Next, the drain channel for draining rainwater or the like is provided in a lower side around an edged circumferential face of the roof panel 4. At first, as shown in Figure 5, a front roof stiffener 19 extending to a width direction in an upper side of the front roof rail 15 is provided. The front roof stiffener 19 has a sectional shape providing a base plate 19a positioned between an upper edge of the front window 5 and the attaching surface 15a of the front roof rail 15, a side plate 19b extending downward from a rear edge of the base plate 19a and crossing a window surface of the front window 5 at about right angle, and a seal attaching plate 19d folding up slightly upward from a rear edge of the bottom plate 19c and extending rearward and approximately horizontally. The front roof stiffener 19 is so constituted that a front edge of the base plate 19a is attached by the adhesive 14 to the front window 5 and the attaching surface 15a of the front roof rail 15 and each lower surface around a rear side of the bottom plate 19c and the seal attaching plate 19d is attached by an adhesive 20 to the support surface 15d of the front roof rail 15.

The seal member 21 extending to a width direction is attached by an adhesive or the like to an upper surface of the seal attaching plate 19d. The seal member 21 is made of rubber having a shape such as a hollow closed sectional shape. As a lower surface 8c of the front panel holder 8 is coherently attached to engage by roof panel weight to the seal member 21 when closing, the portion around a front edge of the roof panel 4 comes to be in watertight condition. Thus, it prevents from immersing water into an automobile cabin. That is, a front edge of the roof panel 4 is put on a rear space 16b of the front roof panel 15 through the front roof stiffener 19. Thus, a drain channel 22 is attached by the side plate 19b, the bottom plate 19c and the side surface 21a around a front side of the seal member 21. Water received in the drain channel 22 is designed to drain from a drain hole (as not shown) formed around both edges extending to a width direction of the drain channel 22 through a front pillar.

As shown in Figure 4, a side roof stiffener 23 extending to a longitudinal direction of automobiles is attached under a side edge of the roof panel 4. The side roof stiffener 23 has a sectional shape providing an approximately horizontal connection plate 23a connected to a frame placed in the side of automobile body not shown, a first side plate 23b extending downward and approximately vertically from an edge placed in the central side of width direction of the connection plate 23a, a bottom plate 23c extending approximately horizontally from a lower edge of the first side plate 23b in the central side of width direction, a second side plate 23d extending upward and approximately vertically from an edge placed in the central side of width direction of the bottom plate 23c, and a seal attaching plate 23e inclining gradually and approximately upwards and extending from an upper edge of the second side plate 23d to the central side of width direction

A seal member 24 extending to a longitudinal direction of vehicle is attached by adhesive or the like to an upper surface of the seal attaching plate 23e. In addition, each of the seal member 24, the seal member 21 and the seal member 27 as later described is formed as a square frame shape. As a lower surface 9c of the side panel holder 9 is coherently engaged by roof panel weight on the seal body 24 when closing, the portion around a side edge of the roof panel 4 comes to be in a watertight condition. Thus, it prevents from immersing water into an automobile cabin. The drain channel 25 is formed by the first side plate 23b, the bottom plate 23c, and the second side plate 23d. Water received in the drain channel 25 is drained from a drain hole (not shown) through the front pillar, center pillar, or the like.

As shown in Figure 7, a rear roof stiffener 26 extending to a width direction is attached by adhesives under a rear edge of the roof panel 4. The rear roof stiffener 26, the front roof stiffener 19, and the side roof stiffener 23 are integrally connected as a square frame shape. The rear roof stiffener 26 has a sectional shape providing an approximately horizontal connection plate 26a connected to a frame placed at a vehicle side not shown, a side plate 26b extending downward from a front edge of the connection plate 26a, a bottom plate 26c extending forward and approximately horizontally from a lower edge of the side plate 26b, and a seal attaching plate 26d bending approximately upward and extending forward and approximately horizontally from a front edge of the bottom plate 26c.

A seal member 27 extending to a width direction is attached by adhesive or the like on an upper surface of the seal attaching plate 26d. At the time of closing the roof panel 4, as above mentioned, the front panel holder 8 and the side panel holder 9 are respectively engaged coherently by roof panel weight on the seal member 21, 24 as to a front edge and a side edge of the roof panel 4. The real panel holder 10 is not coherently engaged by roof panel weight on the seal member 27 as to a rear edge of the roof panel 4, but a lower surface of a rear edge of the roof panel 4 is coherently engaged by roof panel weight on the seal member 27. Thus, the portion around a rear edge of the roof panel 4 is in a watertight condition, and it prevents from immersing water into the automobile cabin. The drain channel 28 is formed by the side plate 26b, the bottom plate 26c, and a side surface 27a placed toward a rear side of the seal member 27. Water received in the drain channel 28 is drained from a drain hole (not shown) formed around either end of width direction of the drain channel 28.

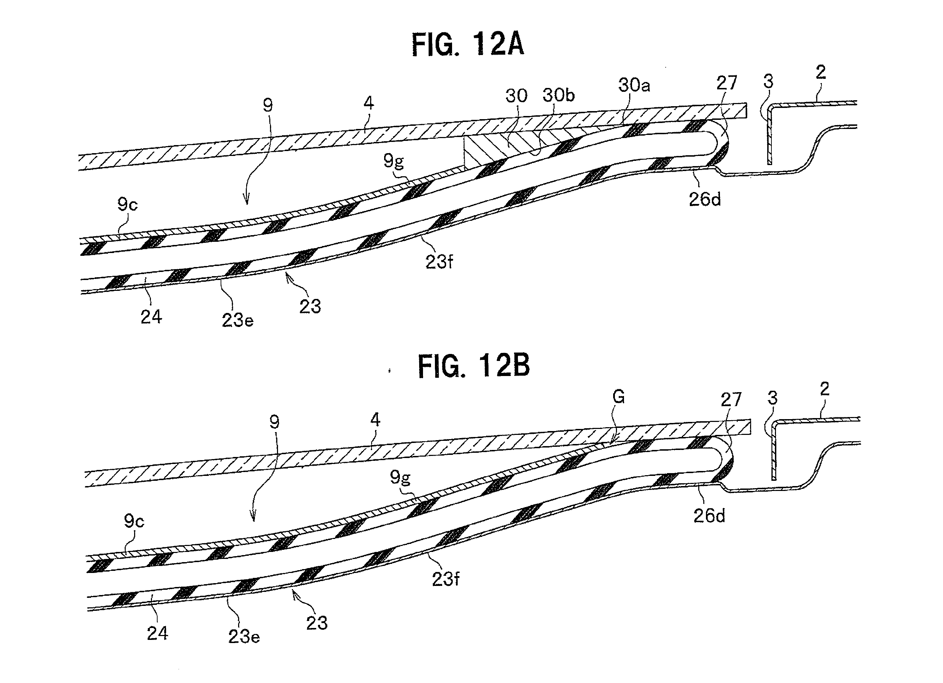

As to a rear edge of the roof panel 4, it is constituted to be engaged coherently by roof panel weight with a lower surface of the roof panel 4 on the seal body 27 without providing the rear panel holder 10. As a result, the following problem exists. As shown in Figure 4, as the side panel holder 9 is coherently engaged by roof panel weight on the seal member 24 as to a side edge of the roof panel 4, a distance corresponding to a height of the side panel holder 9 exists between the roof panel 4 and the seal member 24. On the other hand, as shown in Figure 7, a distance between the roof panel 4 and the seal body 27 is zero. As shown in Figure 12A, as the portion around a rear portion of the seal attaching plate 23e of the side roof stiffener 23 extends rearward, the inclined surface 23f is formed to approach the roof panel 4 gradually. Thus, as the portion around a rear portion of the lower surface 9c of the side panel holder 9 extends rearward such that the seal member is coherently engaged by roof panel weight on the inclined surface 23f, the inclined surface 9g (See Figure 11) is formed to approach the roof panel 4 gradually.

As shown in Figure 12B, when it is constituted to extend rearward the side panel holder 9, a gap G caused by a plate thickness of the lower surface 9c is formed among a rear edge of the lower surface 9c, the roof panel 4, and the seal member 24. Thus, a perfect or complete watertight condition may not be obtained. On the other hand, as shown in Figure 12A, it can prevent from producing the gap G by providing the rear joint member 30 in a rear portion of the side panel holder 9. A lower surface of the rear joint member 30 is formed to be inclined in order to lie on the same surface as the inclined surface 9g of the side panel holder 9. Then, the inclined surface 30b is formed around a position butting against a lower surface of the roof panel 4. (See Figure 11) As a result, the predetermined watertight function can be obtained without producing the gap G. As the side panel holder 9 is made of sheet metal, a rear edge of the lower surface 9c cannot be sharply cut without producing the gap G. On the other hand, when the rear joint member 30 is made of plastics having an excellent formability, the rear edge 30a of the rear joint member 30 can be easily formed as a pointed acute angle.

Next, an open-and-close mechanism of the roof panel 4 will be hereinafter described. In Figure 4, a guide frame 31 extending to a longitudinal direction of vehicle is attached under either side edge of the roof panel 4. The guide frame 31 has a sectional shape providing a cable channel 33 for inserting a push-pull cable 32 reciprocating to a longitudinal direction by a drive motor not shown, and a guide rail channel 35 guiding a front and rear slide of the drive slider 34 (not shown a connection part therebetween) connected with the push-pull cable 32. The guide frame 31 is, for example, constituted by extrusion material made of aluminum alloy.

The drive slider 34 has a body 34A having a vertical plate shape standing up along the guide frame 31, and a plurality of shoes 34B protruding left and right from a lower portion of front and rear edges of the body 34A and sliding the guide rail channel 35. The shoe 34B may be integrally formed with the body 34A, and both bodies may be formed as a separate member. As shown in Figure 2, the body 34A is constituted as a channel shape such that a first lift guide channel 36 and a second lift guide channel 37 are made to penetrate the body 34A left and right in order from around front portion of vehicle.

The first lift guide channel 36 has a shape providing a first horizontal stroke 36A extending approximately horizontally, a first inclined stroke 36B extending obliquely forward and upward from a front edge of the first horizontal stroke 36A, a second horizontal stroke 36C extending forward and approximately horizontally from an upper edge of the first inclined stroke 36B, and a second inclined stroke 36D extending obliquely forward and upward from the second horizontal stroke 36C. The second lift guide channel 37 has a shape providing a first horizontal stroke 37A extending approximately horizontally, an inclining stroke 37B extending obliquely forward and upward from a front edge of the first horizontal stroke 37A, and a second horizontal stroke 37C extending forward and approximately horizontally from an upper edge of the inclined stroke 37B.

A panel support stay 38 is provided between the roof panel 4 and the drive slider 34. With reference to Figures 2 and 3, the panel support stay 38 is a member shaped like a vertical plate and has a shape providing a base plate 39 formed in the front side and a forked portion 40 formed in the rear side. The forked portion 40 is constituted to open in a forked shape rearward between an upper side 41 connected to the roof panel 4 and a lower side 42 engaged with the drive slider 34. The upper side 41 extends approximately to a longitudinal direction along a lower surface of the roof panel 4. The rear edge thereof is connected to one of a plurality of connection pins 43. The lower side 42 is constituted to extend approximately to a longitudinal direction and a rear edge thereof is constituted to attach the second lift guide pin 45 as later described.

In Figure 4, a part of the side panel holder 9 is formed as the bracket 9f having a vertical plate shape as above mentioned. This bracket 9f is, as shown in Figure 2, constituted to connect to around an upper edge of the base plate 39 of the panel support stay 38 and the upper side 41 by a plurality of connection pins 43. The first lift guide pin 44 and the second lift guide pin 45 are attached to a front and lower edge of the base plate 39 and a rear edge of the lower side 42 of the panel support stay 38, respectively. The first lift guide pin 44 and the second lift guide pin 45 are slidably engaged with the first lift guide channel 36 and the second lift guide channel 37, respectively.

In addition, the panel support stay 38 may be integrally formed with the side panel holder 9, or may be constituted to be directly attached by adhesive or the like under the roof panel 4, irrespective of the side panel holder 9.

### [Function]

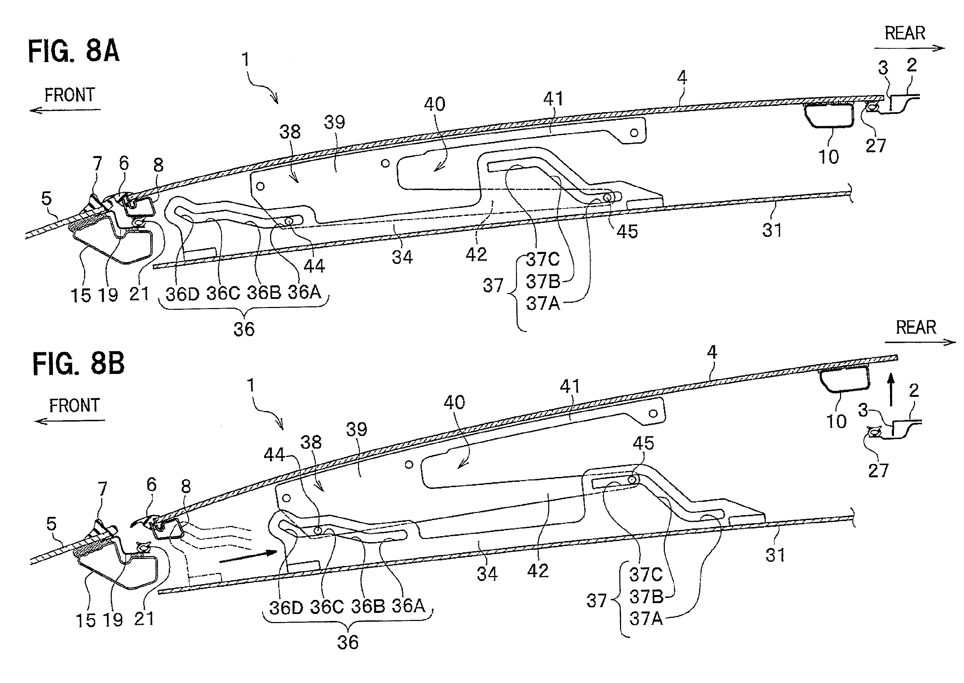

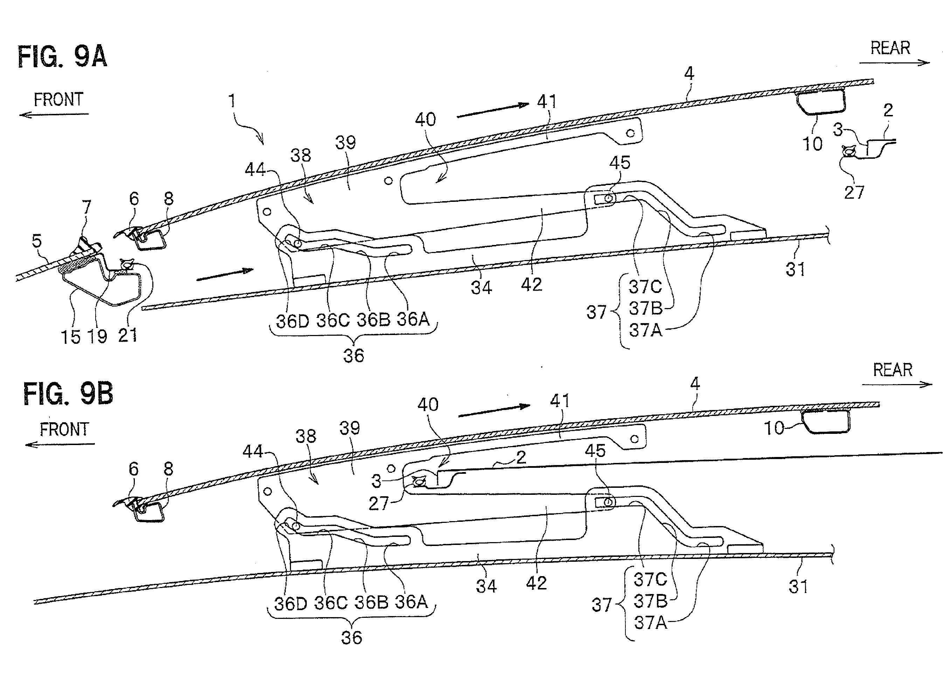

A function of the sunroof device 1 will be described with reference to Figure 8A, 8B, 9A and 9B.
The bracket 9f of the side panel holder 9 is omitted in Figure 8A, 8B, 9A and 9B.
Figure 8A shows a fully closed condition of the roof panel 4. In this occasion, the drive slider 34 positions at a foremost front place thereof. The first lift guide pin 44 positions at the first horizontal stroke 36A of the first lift guide channel 36, and the second guide pin 45 positions at the first horizontal stroke 37A of the second lift guide channel 37.
The front panel holder 8 is coherently engaged by roof panel weight on the seal member 21 in a front edge of the roof panel 4, the side panel holder 9 is coherently engaged by roof panel weight on the seal member 24 in a side edge of the roof panel 4 (See Figure 4), and a lower surface of the roof panel 4 is coherently engaged by roof panel weight on the seal member 27in a rear edge of the roof panel 4. As a result, the watertight condition of the roof panel 4 can be sufficiently maintained.

In Figure 8A, when the drive slider 34 moves rearward through the push-pull cable 32 (Figure 4) by driving the motor not shown, an inner wall of the first inclined stroke 36B of the first lift guide channel 36 pushes up the first lift guide pin 44, and an inner wall of the inclined stroke 37B of the second lift guide channel 37 pushes up the second lift guide pin 45. Thus, the roof panel 4 is designed to move slightly rearward and tilt up. Figure 8B shows a complete and finished condition of the above tilting up. The first lift guide pin 44 positions at the second horizontal stroke 36C of the first lift guide channel 36, and the second lift guide pin 45 positions at the second horizontal stroke 37C of the second lift guide channel 37.

When the drive slider 34 moves rearward from a condition in Figure 8B, as shown in Figure 9A, an inner wall of the second inclined stroke 36D of the first lift guide channel 36 is designed to push rearward the first lift guide pin 44, and thus the roof panel 4 is constituted to slide rearward.

Figure 9B shows a fully opened condition of the opening 3 by moving at foremost rear position. The upper side 41 of the panel support stay 38 positions at an upper side over the fixed roof 2 placed at a rear side of the opening 3, and the lower side 42 thereof positions at a lower side under the fixed roof 2. That is, the forked portion 40 of the panel support stay 38 positions to sandwich the fixed roof 2 placed at a rear direction of the opening 3 vertically. As shown clearly in Figure 9B, the second lift guide pin 45 positions at a rear side relative to a rear edge of the opening 3.

A conventional structure described in Japanese Patent Laid-open Publication No. 41,345 of 2005 is constituted to position two pins connecting between the panel support stay and the slider at a front position relative to a rear edge of the opening. In the above conventional structure, as long as the pin placed in the front side is not laid out at a front position, for example, by extending forward a front edge of the guide rails, it is difficult to increase a distance ranging between the two pins, that is, a support span equivalent to a weight of the roof panel supported by the slider. In this conventional structure, as the two pins are shifted too much at a front position relative to a gravitational center of the roof panel, loads on the panel support stay is easily applied because of a larger moment.

On the other hand, the second lift guide pin 45 is constituted to position at a rear side relative to a rear edge of the opening 3 at a fully opened condition of the opening 3, that is, a part of the engaging portion between the panel support stay 38 and the drive slider 34, which is a part of support section for weight of the roof panel 4, is constituted to position on a rear side relative to a rear edge of the opening 3. As a result, a support span S (See Figure 3) of the roof panel 4 can be increased, maintaining an amount of opening area of the opening 3 without taking specific measures, for example, extending forward a front edge of the opening 3. As a support portion for a weight of the roof panel 4 is on the rear side and approaches a gravitational center of the roof panel 4, compared with the conventional device, a load applied to the panel support stay 38 can be decreased.

The panel support stay 38 is constituted to have a forked portion 40 formed in a forked shape to open rearward by the upper side 41 connected to the roof panel 4 and the lower side 42 engaged with the drive slider 34. At the time of full opened condition of the opening 3 as shown in Figure 9B, as the forked portion 40 is positioned to sandwich vertically the fixed roof 2 placed in a rear direction of the opening 3, the panel support stay 38 can become simple in constitution and the support span S of the roof panel 4 can be extremely increased.

As above mentioned, the sunroof device 1 is constituted to close the opening 3 of the roof such that a front edge of the movable roof panel 4 extends to an upper edge of the front window 5 without sandwich a roof outside plate of the fixed roof 2. Then, as the roof outside plate does not exist in the space between the front window 5 and the roof panel 4, a visual field ranging obliquely forward and upward can be increased. In conventional arts (for example, Japanese Patent Laid-open Publication No. 163112 of 2010), the front roof rail is constituted to be vertically divided into two pieces. As a result, a flange for welding the two pieces is likely to prevent from the visual field. The front roof rail 15 according to this embodiment is constituted to bend a sheet metal to be approximately a closed cross section, the flange is not required. As a result, the visual field ranging obliquely forward and upward can be increased. The front roof rail 15 is constituted to position at least one part (front space 16a) of the closed sectional space 16 directly under a portion attached to the front window 5. As a result, a reinforcement function of the front window 5 can be sufficiently ensured.

When the joint section 17 between plates of the front roof rail 15 is closed by the patch piece 18, the rigidity (specifically, torsion rigidity) of the front roof rail 15 can be further increased. In this embodiment, in case that the front roof rail 15 is attached by the adhesive 14 to the front window 5, when it is constituted to close the joint section 17 with the adhesive 14, the rigidity of the front roof rail 15 can be increased in a simple structure.

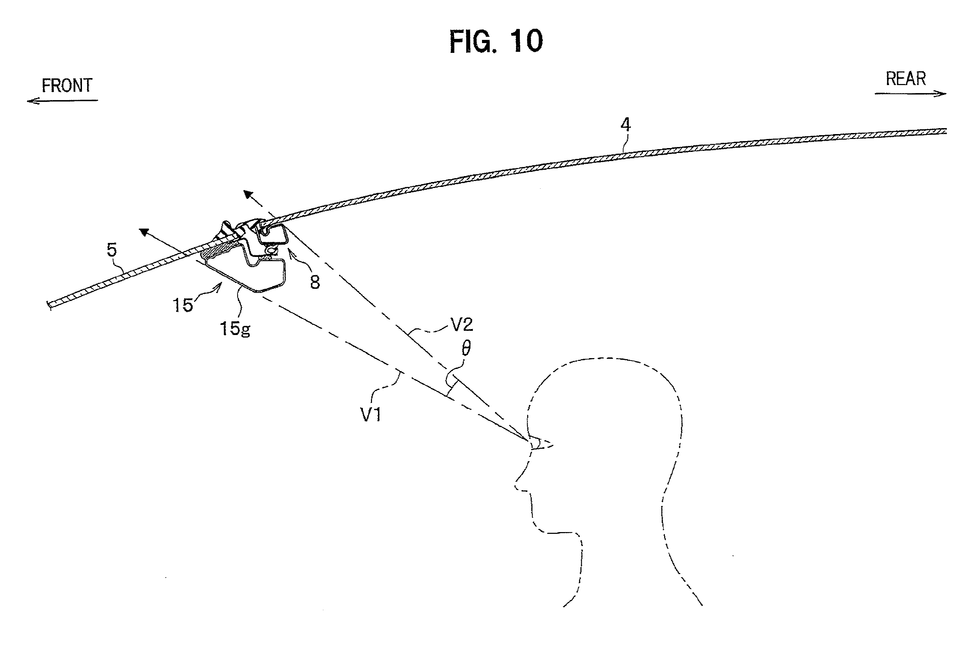

When it is constituted to mount a front edge of the roof panel 4 over the closed sectional space 16 of the front roof rail 15, specifically in the rear space 16b at the time of closing the opening 3, the load applied by the roof panel 4 can be effectively received by a function of the rigidity of the closed sectional space 16. As a result, as it is not required to separately provide a flange or the like for mounting the front edge of the roof panel 4, a structure around the mounting space can become compact. As shown in Figure 10, a crossing angle θ between visual fields V1 and V2 becomes small and the visual field ranging obliquely forward and upward can be increased.

In case where it is constituted to provide the front roof rail 15 such that at least one part (front space 16a) of the closed sectional space 16 is positioned directly under the attaching portion of the front window 5, it is constituted to provide the inclined surface 15g, which inclines obliquely forward and upward and an upper edge thereof positions at the foremost front side of the front roof rail 15. As a result, the visual field V1 seen from a seated crew can be preferably maintained along a surface of the inclined surface 15g, and the visual field of the front window 5 can be effectively and largely maintained.

In case where it is constituted, at the time of closing the opening 3, to be engaged by roof panel weight with the front panel holder 8 on the seal member 21 at a front edge of the roof panel 4 and engaged by roof panel weight with a lower surface of the roof panel 4 directly on the seal member 27 at a rear edge of the roof panel holder 10, a space extending vertically in a sealing structure around a rear edge of the roof panel 4 can be thin, compared with a case engaged by roof panel weight with the rear panel holder 10 on the seal member 27. As a result, a head clearance can be largely maintained or ensured.

As shown in Figure 12A, it is constituted to provide the rear joint member 30 made of plastics forming the inclined surface 30b extending obliquely rearward and upward until the rear edge 30a comes into contact a lower surface of the roof panel 4, and engage with roof panel weight with the inclined surface 30b of the rear joint member 30 on the seal member 24, which ranges from a portion engaged by roof panel weight with the side panel holder 9 to a portion engaged by roof panel weight with a lower surface of a rear edge of the roof panel 4. As a result, it can prevent from producing a gap G formed between the roof panel 4 and the seal member 24 as shown in Figure 12B, and a watertight function of the seal member 24 can be excellently increased.

In the case where it is constituted to provide the drain channels 22, 28 both in the front roof stiffener 19 and the rear roof stiffener 26, and a part of channel walls of the drain channels 22, 28 is formed by the seal member 21, 27, it is constituted to be compact in structure around the drain channels 22, 28. As a result, it is constituted to be partly used both as a drain function and a watertight function of the roof panel and it becomes simple and compact in structure around the drain channels 22, 28. Further, the sectional shapes of the front roof stiffener 19 and the rear roof stiffener 26 are also simple in structure and shape. It may be constituted to form the seal member 24 as a part of channel wall of the drain channel 25 in case of the side roof stiffener 23.

As above mentioned, a preferred embodiment of the present invention has been described. In the above-mentioned embodiment, although the drive slider 34 is constituted as a single piece or a single body, the slider may be separately made from a plurality of pieces.

## Claims

1. A sunroof device constituted to close a roof opening (3) by extending a front edge of a movable roof panel (4) to an upper edge of a front window (5) without sandwiching a roof outside plate,
comprising:
a roof stiffener mounted at an edge of the opening (3), and
a seal member (24) mounted in the roof stiffener and sealing the movable roof panel (4) at the time of closing the roof opening (3),
wherein
the roof stiffener is provided with a drain channel (25) and
the seal member (24) is constituted to form a part of channel wall of the drain channel (25).

2. The sunroof device according to Claim 1,
wherein
the seal member (24) is constituted to engage by roof panel (4) weight with a lower surface of the roof panel (4) at a rear edge of the roof panel (4).
